# EUROPÄISCHE PATENTSCHRIFT

(11) **EP 3 067 529 B1**
(45) Veröffentlichungstag und Bekanntmachung des Hinweises auf die Patenterteilung: **03.01.2018**
(21) Anmeldenummer: 16000510.4
(22) Anmeldetag: 02.03.2016
(51) Int. Cl.: F01N 3/28

(54) **VORRICHTUNG ZUR NACHBEHANDLUNG VON ABGAS EINES KRAFTFAHRZEUGS**
DEVICE FOR AFTER-TREATMENT OF EXHAUST FROM A MOTOR VEHICLE
DISPOSITIF DE POST-TRAITEMENT DE GAZ D'ECHAPPEMENT D'AUTOMOBILE

(30) Priorität: 10.03.2015 DE 102015002974
(43) Veröffentlichungstag der Anmeldung: 14.09.2016
(73) Patentinhaber: MAN Truck & Bus AG, 80995 München (DE)
(72) Erfinder: Püschel, Maximilian, 84028 Landshut (DE); Albert, Herbert, 91056 Erlangen (DE)
(74) Vertreter: v. Bezold & Partner Patentanwälte - PartG mbB

(56) Entgegenhaltungen:
- WO-A2-2006/138174
- DE-A1-102012 008 556
- DE-A1-102012 014 334

## Beschreibung

Die Erfindung betrifft eine Vorrichtung zur Nachbehandlung von Abgasen aus einer Verbrennungskraftmaschine vorzugsweise eines Kraftfahrzeugs, insbesondere eines Nutzfahrzeugs, z. B. eines Lastkraftwagens oder eines Omnibusses.

Aus der DE 10 2012 014 334 A1 ist bereits eine Vorrichtung zur Nachbehandlung von Abgasen aus einer Verbrennungskraftmaschine eines Kraftfahrzeugs bekannt. Die Vorrichtung weist ein Abgaseinlassrohr, ein Mischrohr und ein spiralförmiges Gehäuses auf. Eine Dosiereinrichtung dient zur Zufuhr eines Additivs in das Mischrohr, wobei sich das Additiv mit dem Abgas im Mischrohr möglichst homogen vermischen soll. Ein Nachteil daran ist, dass die Abgasströmung im Mischrohr insbesondere in der Nähe der Additiv Zuführeinrichtung von einer rotationssymmetrischen Abgasströmung abweicht.

Die WO 2006/138174 A2 offenbart einen Abgasbrenner. Der Abgasbrenner ist in einem Abgasstrang angeordnet und weist einen Verwirbler auf. Der Verwirbler verwirbelt Abgas einer Kraftmaschine zum Stabilisieren einer von dem Brenner erzeugten Flamme in dem Abgasstrang, ohne dass ergänzende Verbrennungsluft verwendet wird, wenn die Kraftmaschine über Leerlaufniveau betrieben wird.

Die DE 10 2012 008 556 A1 offenbart eine Vorrichtung zur Abgasnachbehandlung eines Abgasmassenstroms in einem Abgasstrang. In dem Abgasstrang ist ein Injektor zum Zuführen von Reduktionsmittel in den Abgasmassenstrom angeordnet. Ein zylinderförmiges Abgasstrangsegment weist einen tangentialen Einlass auf. Stromabwärts des tangentialen Einlasses ist ein Mischer zur Umkehrung der Drehrichtung des Abgasmassenstroms angeordnet.

Eine Aufgabe der Erfindung ist es, eine verbesserte und/oder alternative Vorrichtung zur Nachbehandlung von Abgas aus einer Verbrennungskraftmaschine vorzugsweise eines Kraftfahrzeugs zu schaffen.

Diese Aufgabe kann mit dem Gegenstand des unabhängigen Anspruchs gelöst werden. Vorteilhafte Weiterbildungen der Erfindung können den abhängigen Ansprüchen und der nachfolgenden Beschreibung bevorzugter Ausführungsformen der Erfindung entnommen werden.

Die Erfindung schafft eine Vorrichtung zur Nachbehandlung von Abgas einer Verbrennungskraftmaschine durch Mischung des Abgases mit einem (z. B. zudosierten) zumindest teilweise flüssigen Additiv, Verdampfung des flüssigen Anteils des Additivs und zweckmäßig Aufbereitung des Abgases für einen nachgeordneten Katalysator.

Die Vorrichtung umfasst eine einen Abgaseintritt aufweisende Vorkammer, eine Hauptkammer, eine Mischeinrichtung (z. B. Mischrohr) zum Mischen des Abgases mit einem Additiv (z. B. eine Harnstoff-Wasser-Lösung) und eine Zwischeneinrichtung (z. B. Düseneinrichtung, insbesondere Düsenkorb). Die Zwischeneinrichtung ist ausgebildet, so dass über sie ein Abgas-Teilstrom aus der Vorkammer der Mischeinrichtung zuführbar ist. Der Abgas-Teilstrom ist vorzugsweise über die Stirnseite der Mischeinrichtung und/oder der Zwischeneinrichtung der Mischeinrichtung zuführbar.

Die Zwischeneinrichtung weist Drallelemente (z. B. Drallklappen) auf, um die Drall-/Rotationsrichtung der in der Vorkammer erzeugten Drallströmung des Abgases beim Überströmen des Abgases in das Innere der Zwischeneinrichtung umzukehren. Alternativ oder ergänzend kann die Vorkammer einen Abgas-Teilstrom in eine Drall-/Rotationsrichtung beaufschlagen. Die Hauptkammer kann einen Abgas-Teilstrom aus der Vorkammer ebenfalls in eine Drall-/Rotationsrichtung beaufschlagen. Die Drall-/Rotationsrichtung des Abgases in der Vorkammer ist zweckmäßig gegenläufig zur Drall-/Rotationsrichtung des Abgases in der Hauptkammer ausgeführt ist.

Dadurch kann eine im Wesentlichen gleichmäßige und rotationssymmetrische Einströmung des Abgases aus der Vorkammer in die Zwischeneinrichtung ermöglicht werden und/oder ein axial und radial im Wesentlichen gleichmäßiges Einströmen des Abgas aus der Hauptkammer in die Mischeinrichtung. Dadurch wird zweckmäßig sichergestellt, dass auch das eindosierte Additiv von allen Seiten gleichmäßig angeströmt wird und sich dadurch symmetrisch zur Mittelachse des Mischrohres im Mischrohr verteilt.

Die Vorkammer könnte deshalb zweckmäßig auch als Abgas-Verteilkammer bezeichnet werden, insbesondere zum Verteilen des Abgases einerseits zur Zwischeneinrichtung und andererseits zur Hauptkammer.

Die Mischeinrichtung kann zweckmäßig über ihre Mantelfläche und die Hauptkammer mit der Vorkammer Abgas-strömungstechnisch verbunden sein. Alternativ oder ergänzend kann die Mischeinrichtung über ihre Stirnseite und insbesondere eine Stirnseite der Zwischeneinrichtung und Durchgangsöffnungen in der Mantelfläche der Zwischeneinrichtung mit der Vorkammer Abgas-strömungstechnisch verbunden sein.

Es ist somit möglich, dass ein Abgas-Teilstrom aus der Vorkammer (vorzugsweise über die weiter unten erörterte perforierte Trennwand) in die Hauptkammer und von der Hauptkammer durch die Mantelfläche der Mischeinrichtung in die Mischeinrichtung strömbar ist und/oder ein Abgas-Teilstrom aus der Vorkammer durch die Mantelfläche der Zwischeneinrichtung über die Stirnseite der Mischeinrichtung in die Mischeinrichtung strömbar ist.

Die Zwischeneinrichtung ist vorzugsweise Abgas-strömungstechnisch zwischen der Vorkammer und der Mischeinrichtung angeordnet.

Die Zwischeneinrichtung kann als zylindrisches Rohr oder konisches Rohr (z. B. mit einem Konuswinkel von zweckmäßig 40° bis 60°) ausgeführt sein.

Die Vorrichtung umfasst vorzugsweise eine perforierte Trenneinrichtung (z. B. Trennwand).

Es ist möglich, dass die Mischeinrichtung über ihre Mantelfläche, die Hauptkammer und die perforierte Trenneinrichtung mit der Vorkammer Abgas-strömungstechnisch verbunden ist. Die Trenneinrichtung ist Abgas-strömungstechnisch zweckmäßig zwischen der Vorkammer und der Hauptkammer angeordnet.

Die perforierte Trenneinrichtung kann z. B. schräg und/oder rechtwinklig zur Mittelachse der Zwischeneinrichtung, der Mischeinrichtung und/oder der Vorkammer ausgerichtet sein.

Die perforierte Trenneinrichtung ist vorzugsweise eine perforierte, z. B. plattenförmige Trennwand.

Es ist möglich, dass ein Hüllelement (z. B. Hüllrohr) die Zwischeneinrichtung in Umfangsrichtung der Zwischeneinrichtung umgibt. Das Hüllelement kann rohrförmig ausgeführt sein und/oder eingangsseitig trichterförmig ausgeführt sein.

Es ist möglich, dass die Vorkammer eine Innenkontur und/oder Innenform aufweist, um Abgas, insbesondere den zugehörigen Abgas-Teilstrom, in der Vorkammer in eine Drall-/Rotationsrichtung zu beaufschlagen, vorzugsweise so, dass es das Hüllelement umströmt. Die Vorkammer kann dazu einen im Wesentlichen ovalen Querschnitt mit einseitiger Delle aufweisen, insbesondere einen ovalen Querschnitt mit unterschiedlichen Endradien und einseitiger, zwischen den Endradien liegender Delle.

Die Hauptkammer umfasst vorzugsweise eine Einlasshaube und/oder einen Spiralkörper.

Es ist möglich, dass sich der Querschnitt der Einlasshaube verjüngt, zweckmäßig in Abgas-Strömungsrichtung und/oder ausgehend von der perforierten Trenneinrichtung.

Der Spiralkörper ist insbesondere ausgeführt, um Abgas, zweckmäßig den zugehörigen Abgas-Teilstrom, in der Hauptkammer, insbesondere deren Spiralkörper, in eine Drall-/Rotationsrichtung zu beaufschlagen, vorzugsweise so, dass die Drallrichtung des Abgases in der Hauptkammer, insbesondere deren Spiralkörper, gegenläufig zur Drall-/Rotationsrichtung des Abgases in der Vorkammer ist.

Die Mischeinrichtung erstreckt sich vorzugsweise im Wesentlichen mittig im Spiralkörper, zumindest abschnittsweise. Eine außermittige Platzierung ist ebenfalls möglich.

Es ist möglich, dass die Mischeinrichtung in ihrer Mantelfläche Abgas-Durchgangsöffnungen mit nach innen ausgestellten Kiemen aufweist, vorzugsweise um zu verhindern, dass das über die Zuführungseinrichtung eindosierte Additiv die Mischeinrichtung in Richtung Hauptkammer verlassen kann und/oder die Kiemen als Verdampfungsflächen für das Additiv wirken, wenn sie durch das Überströmen des heißen Abgases aus der Hauptkammer beheizt werden.

Die strömungsabgewandten Flanken der Kiemen sind vorzugsweise zumindest abschnittsweise offen ausgeführt, während die strömungszugewandten Flanken der Kiemen alternativ oder ergänzend zumindest abschnittsweise geschlossen ausgeführt sind.

Die Kiemen auf der Mischeinrichtung können axial und/oder radial zueinander versetzt angeordnet sein.

Die Vorrichtung umfasst insbesondere eine Zuführeinrichtung (z. B. Düsen- und/oder Dosiereinrichtung) zum Zuführen, insbesondere Einsprühen, eines Additivs (z. B. Harnstoff-Wasser-Lösung) zu dem Abgas.

Die Zuführeinrichtung ist zweckmäßig so angeordnet, dass sie das Additiv vorzugsweise stirnseitig, insbesondere im Wesentlichen, koaxial in die Zwischeneinrichtung abgibt. D. h. insbesondere, dass die Additiv-Einspritzdüse im Wesentlichen koaxial zur Zwischeneinrichtung ausgerichtet ist.

Die Zwischeneinrichtung kann konisch oder zylindrisch ausgeformt sein.

Die Zwischeneinrichtung schließt stirnseitig mittelbar oder unmittelbar an einen Düsentopf an, zweckmäßig an einen Düsentopf der Zuführeinrichtung zum Zuführen des Additivs zu dem Abgas. Die Zwischeneinrichtung wird vorzugsweise stirnseitig durch den Düsentopf geschlossen.

Der Düsentopf kann eine Konusform aufweisen. Die Konusform des Düsentopfs ist zweckmäßig der Zwischeneinrichtung zugewandt.

Die Zwischeneinrichtung ist also vorzugsweise einerseits stirnseitig Abgas-strömungstechnisch mit der Mischeinrichtung verbunden, andererseits stirnseitig Abgas-strömungstechnisch geschlossen, aber mit einer Additiv-Einspritzdüse versehen.

Vorzugsweise ist an den Düsentopf die Additiv-Einspritzdüse der Zuführeinrichtung angebracht.

Der Düsentopf ist vorzugweise in Richtung Zwischeneinrichtung konisch ausgeformt, z. B. mit einem Konuswinkel von 120° bis 178°, vorzugsweise 150° bis 175°.

Es ist möglich, dass die Zwischeneinrichtung in ihrer Mantelfläche Abgas-Durchgangsöffnungen aufweist und/oder keinen stirnseitigen Abgaseintritt aufweist, insbesondere stirnseitig durch den Düsentopf geschlossen wird.

Es ist möglich, dass zwischen Mischeinrichtung und Zwischeneinrichtung ein Ringspalt frei bleibt, durch den ebenfalls Abgas in die Mischeinrichtung überströmen kann.

Es ist möglich, dass der Düsentopf und das Hüllelement einen Ringspalt definieren, über den Abgas aus der Vorkammer der Zwischeneinrichtung, insbesondere über Abgas-Durchgangsöffnungen in deren Mantelfläche, zuführbar ist.

Die Mischeinrichtung kann in ihrer Mantelfläche längliche Abgas-Durchgangsöffnungen aufweisen, die zweckmäßig parallel oder schräg zur Mittelachse der Mischeinrichtung ausgerichtet sein können.

Die Zwischeneinrichtung kann in ihrer Mantelfläche längliche Abgas-Durchgangsöffnungen aufweisen, die zweckmäßig in die Mittelachse aufweisenden Ebenen oder in zur Mittelachse schräg verlaufenden Ebenen ausgerichtet sein können.

Die Kiemen der Mischeinrichtung können länglich ausgeführt sein, zweckmäßig parallel oder schräg zur Mittelachse der Mischeinrichtung.

Die Drallelemente der Zwischeneinrichtung können länglich ausgeführt sein, zweckmäßig in die Mittelachse aufweisenden Ebenen oder in zur Mittelachse schräg verlaufenden Ebenen ausgerichtet sein.

Die Form der Drallelemente kann im Wesentlichen dreieckig, rechteckig oder trapezförmig sein.

Es ist möglich, dass die Drall-/Rotationsrichtung des Abgases, das über die Hauptkammer und die Durchgangsöffnungen der Mantelfläche der Mischeinrichtung der Mischeinrichtung zugeführt wird, und die Drall-/Rotationsrichtung des Abgases, das über die Zwischeneinrichtung der Mischeinrichtung zugeführt wird, im Wesentlichen gleichläufig sind.

Zu erwähnen ist, dass der Spiralkörper der Hauptkammer einen Anfangsradius und einen Endradius aufweist und der Anfangsradius vorzugsweise in einem Bereich von 120% bis 190%, insbesondere 150% bis 170%, des Endradius liegt.

Zu erwähnen ist ferner, dass der Düsentopf in einer einfachen Ausführungsform z. B. plattenförmig ausgebildet sein kann, also nicht zwangsläufig topfförmig ausgebildet sein muss.

Zu erwähnen ist außerdem, dass nach der Additivzufuhr zu dem Abgas ein Gemisch aus Abgas und Additiv vorliegt. Das Merkmal Abgas kann im Rahmen der Erfindung also zweckmäßig vor der Additivzufuhr Abgas ohne Additiv umfassen bzw. nach der Additivzufuhr Abgas mit Additiv, also ein Gemisch aus Abgas und Additiv.

Zu erwähnen ist des Weiteren, dass der Düsentopf vorzugsweise stirnseitig die Zwischeneinrichtung Abgas-strömungstechnisch schließt und zugleich eine Öffnung für die Additiv-Einspritzdüse zur Verfügung stellt.

Die Erfindung ist nicht auf eine Vorrichtung beschränkt, sondern umfasst auch ein Kraftfahrzeug, vorzugsweise Nutzfahrzeug, insbesondere Lastkraftwagen oder Omnibus, mit einer Vorrichtung wie hierin beschrieben.

Die zuvor beschriebenen bevorzugten Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine Seitenansicht einer Vorrichtung gemäß einer Ausführungsform der Erfindung,
- Figur 2a: zeigt eine Schnittansicht gemäß Schnitt A-A aus Figur 1,
- Figur 2b: zeigt eine Schnittansicht gemäß Schnitt B-B aus Figur 1,
- Figur 3: zeigt eine Querschnittsansicht der Vorkammer gemäß einer Ausführungsform der Erfindung,
- Figur 4: zeigt eine Querschnittsansicht des Spiralkörpers der Hauptkammer gemäß einer Ausführungsform der Erfindung,
- Figur 5: zeigt eine Mischeinrichtung gemäß einer Ausführungsform der Erfindung,
- Figur 6: zeigt einen Düsentopf gemäß einer Ausführungsform der Erfindung,
- Figur 7: zeigt eine perspektivische Ansicht einer Zwischeneinrichtung gemäß einer Ausführungsform der Erfindung,
- Figur 8: zeigt eine Draufsicht auf die Zwischeneinrichtung der Figur 7,
- Figur 9: zeigt eine Frontansicht der Zwischeneinrichtung der Figuren 7 und 8,
- Figur 10: zeigt eine Seitenansicht auf die Zwischeneinrichtung der Figuren 7 bis 9.

Die unter Bezugnahme auf die Figuren beschriebenen Ausführungsformen stimmen teilweise überein, so dass ähnliche oder identische Teile mit den gleichen Bezugszeichen versehen sind, und zu deren Erläuterung auch auf die Beschreibung der anderen Ausführungsformen oder Figuren verwiesen wird, um Wiederholungen zu vermeiden.

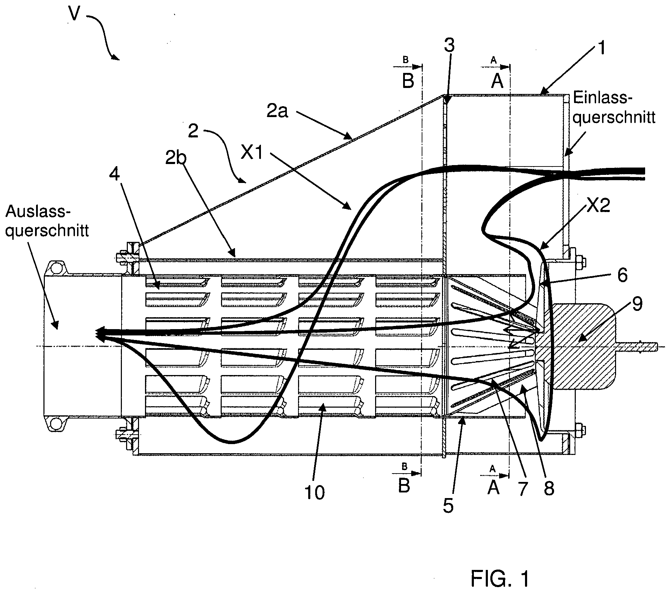

Figur 1 zeigt eine Vorrichtung V zur Nachbehandlung von Abgas einer Verbrennungskraftmaschine, vorzugsweise durch Mischung des Abgases mit einem zudosierten zumindest teilweise flüssigen Additiv (z. B. eine wässrige Harnstofflösung), Verdampfung des flüssigen Anteils des Additives und Aufbereitung des Abgas-Additiv-Gemischs für einen nachgeordneten Katalysator.

Die Vorrichtung V umfasst insbesondere eine Vorkammer 1, eine Hauptkammer 2, eine perforierte Trenneinrichtung 3 (Trennwand), eine Mischeinrichtung 4 (Mischrohr) und eine Zwischeneinrichtung 7 (Düsenkorb).

Die Vorkammer 1 und die Hauptkammer 2 sind zum einen über die perforierte Trennwand 3, zum anderen über das Mischrohr 4 miteinander verbunden. Der Abgaseintritt erfolgt über einen Einlassquerschnitt in die Vorkammer 1.

Ein Abgas-Teilstrom X1 der Vorkammer 1 gelangt über die perforierte Trennwand 3 in die Hauptkammer 2 und von dort durch Durchgangsöffnungen in der Mantelfläche des Mischrohrs 4 in das Mischrohr 4.

Ein Abgas-Teilstrom X2, also der in der Vorkammer 1 verbleibende Abgas-Teilstrom X2, gelangt durch Durchgangsöffnungen in der Mantelfläche des Düsenkorbs 7 in den Düsenkorb 7 und von dort stirnseitig in das Mischrohr 4. Eine Stirnseite des Düsenkorbs 7 und eine Stirnseite des Mischrohrs 4 sind somit Abgas-strömungstechnisch miteinander verbunden.

Der Abgas-Teilstrom X2 wird insbesondere durch die Kontur/Form der Vorkammer 1 in eine Drallbewegung versetzt und umströmt dadurch ein Hüllelement 5 (Hüllrohr), das als Verlängerung des Mischrohres 4 in die Vorkammer 1 hineinragt und den Düsenkorb 7 in dessen Umfangsrichtung umgibt.

Die Vorrichtung V umfasst ferner eine Zufuhreinrichtung 9 zum Zuführen eines Additivs (z. B. eine wässrige Harnstofflösung) zu dem Abgas. Die Zufuhreinrichtung 9 weist zu diesem Zweck eine Additiv-Einspritzdüse auf.

Zwischen dem Hüllrohr 5 und einem zweckmäßig konischen Düsentopf 6 ist ein Ringspalt ausgebildet. Der Düsentopf 6 schließt stirnseitig die Zwischeneinrichtung 7 Abgas-strömungstechnisch und stellt zugleich eine Öffnung für die Additiv-Einspritzdüse zur Verfügung stellt.

Der Abgas-Teilstrom X2 strömt insbesondere durch den Ringspalt zwischen Hüllrohr 5 und Düsentopf 6 in den Düsenkorb 7.

Der Düsenkorb 7 ist in der gezeigten Ausführungsform ein konisches, perforiertes Rohr, mit Abgas-Durchgangsöffnungen in seiner Mantelfläche, kann aber auch als perforiertes zylindrisches Rohr ausgeführt sein. Der Düsenkorb 7 ist am vorderen Endbereich stirnseitig an den Düsentopf 6 angeschlossen und mündet am hinteren Endbereich stirnseitig in das Mischrohr 4.

Die Hauptkammer 2 besteht aus einer Einlasshaube 2a und einem Spiralkörper 2b. Die Einlasshaube 2a ist so gestaltet, dass sich ihr Querschnitt in Strömungsrichtung verjüngt. Dadurch wird eine in axialer Richtung gleichmäßige Anströmung des Spiralkörpers 2b erreicht.

An der Außenseite des Düsenkorbes 7 sind Drallelemente 8 (Drallklappen; der Übersichtlichkeit halber ist nur eines mit einem Bezugszeichen versehen) angebracht.

Die Drallklappen 8 sorgen dafür, dass Abgas (X2) in ein Drallrichtung beaufschlagt wird.

Die Spiralkörper 2b sorgt dafür, dass Abgas (X1) in eine Drallrichtung beaufschlagt wird.

Die Drallklappen 8 bewirken, dass die Drall-/Rotationsrichtung der in der Vorkammer 1 erzeugten Abgas-Drallströmung beim Überströmen des Abgases, insbesondere des Abgas-Teilstroms X2, ins Innere des Düsenkorbes 7 umgekehrt wird. Diese Umkehr der Drallströmung bewirkt eine sehr gleichmäßige und rotationsymmetrische Einströmung des Abgases in den Düsenkorb 7.

Strömt das Abgas durch den Spiralkörper 2b, wird es in eine Drall-/Rotationsrichtung beaufschlagt, die Rotationsrichtung entgegengesetzt/gegenläufigzur Drall-/Rotationsrichtung der Drallströmung in der Vorkammer 1 ist. Diese Drallströmung umströmt nun das in der Mitte der Spirale des Spiralkörpers 2b liegende Mischrohr 4 und sorgt für ein axial und radial gleichmäßiges Eindringen der Strömung in das Mischrohr. 4

Der Abgas-Teilstrom X2 wird im Düsenkorb 7 mit dem Additiv der Zuführeinrichtung 9 beaufschlagt.

Der mit dem Additiv beaufschlagte Teilstrom X2 gelangt im Mischrohr 4 mit dem Abgas-Teilstrom X1 in Verbindung.

Direkt an den Düsentopf 6 angebracht ist die Einspritzdüse der Zuführeinrichtung 9. Durch die im Wesentlichen Rotationssymmetrie der Abgas-Strömung zum Düsenkorb 7 liegt die Düsenachse der Einspritzdüse vorzugsweise genau im Zentrum der Abgas-Strömung. Dadurch wird eine gleichmäßige Anströmung des Additiv-Sprays von allen Seiten erreicht und das Additiv-Spray bleibt im Wesentlichen rotationsymmetrisch zur Düsenachse.

Die Abgas-Strömung im Düsenkorb 7 und Mischrohr 4 setzt sich aus einer axialen und einer rotatorischen Komponente zusammen. Durch diese Strömung werden eine axiale Kraft und eine radiale Kraft (Zentrifugalkraft durch rotatorische Strömung) auf die Additiv-Tröpfchen ausgeübt. Das Verhältnis dieser beiden Kräfte ist entscheidend für eine erfolgreiche Vermischung und Aufbereitung des Gemisches aus Abgas und Additiv.

Bei idealem Kräfteverhältnis ist der Durchmesser des Additiv-Spraybildes am Ende des Düsenkorbes 7 gerade so groß, dass das Additiv-Spray noch keinerlei Wandkontakt erfahren hat, aber bereits kurz nach Verlassen des Düsenkorbes 7 die kleinsten Tröpfchen auf die Innenwand des Mischrohres 4 auftreffen.

Das Mischrohr 4 ist mit nach innen ausgestellten Kiemen 10 (der Übersichtlichkeit halber ist nur eine mit einem Bezugszeichen versehen) ausgestattet, die verhindern, dass das aus der Vorkammer 1 einströmende Abgas-Additiv-Gemisch das Mischrohr 4 in Richtung Hauptkammer 2 verlassen kann. Stattdessen wirken die Kiemen 10 als Verdampfungsflächen, die durch das einströmende Abgas aus der Hauptkammer 2 beheizt werden. Tröpfchen des Additivs, die sich nun auf den Kiemen 10 anlagern, können so verdampft werden.

Durch das Eindringen des Abgases über die Kiemen 10 nimmt die Drallstärke im Mischrohr 4 in Strömungsrichtung immer mehr zu. Dadurch können stromab immer größere Additiv-Tröpfchen von der Strömung erfasst und nach außen zu den Verdampfungsflächen der Kiemen 10 transportiert werden.

Das Abgas-Additiv-Gemisch verlässt das Mischrohr 4 an der hinteren Stirnseite des Mischrohrs 4 im Idealfall ohne flüssige Additiv-Restanteile.

Die Perforation der Trennwand 3 ist ausschlaggebend für die Strömungsanteile von Vorkammer 1 und Hauptkammer 2. Darüber hinaus hat sie entscheidenden Einfluss auf eine gleichmäßige Anströmung des Spiralkörpers 2b in der Hauptkammer 2. Als ideal hat sich ein Vorkammer-Strömungsanteil von 10% bis 30% herauskristallisiert.Desweiteren beeinflusst die Trennwand 3 die Gleichverteilung in Vor- und Hauptkammer und den Druckverlust der Vorrichtung. Durch eine geeignete Gestaltung von Anordnung und Querschnitt der Perforation kann ein Optimum dieser Parameter erreicht werden.

Die Gestaltung des Hüllrohres 5 kann für eine einfache Fertigbarkeit und geringen Druckverlust als gerades Rohr ausgeführt werden. Für eine bessere Symmetrie der Drallströmung hat es sich aber als vorteilhaft erwiesen, das Ende des Hüllrohrs 5 an der Ringspaltseite trichterförmig aufzuweiten. Die Länge des Hüllrohres 5 ist verantwortlich für die Fläche des Ringspalts zwischen Hüllrohr 5 und Düsentopf 6.

Die Gestaltung der Einlasshaube 2a der Hauptkammer 2 hat entscheidenden Einfluss auf die gleichmäßige Anströmung des Spiralkörpers 2b der Hauptkammer 2. Sie kann wie in DE 10 2012 014 334 A1 beschrieben gestaltet werden. Darüber hinaus hat es sich aber als vorteilhaft für den Druckverlust erwiesen, einen sich verjüngenden Strömungsquerschnitt zu verwenden. Die Verjüngung des Strömungsquerschnitts in Abgas-Strömungsrichtung muss auf die Anströmung des Mischrohrs 4 und die Perforation der Trennwand 3 abgestimmt sein. Als besonders vorteilhaft für eine axial gleichmäßige Anströmung des Spiralkörpers 2b hat sich eine progressive Verjüngung der Einlasshaube 2a erwiesen.

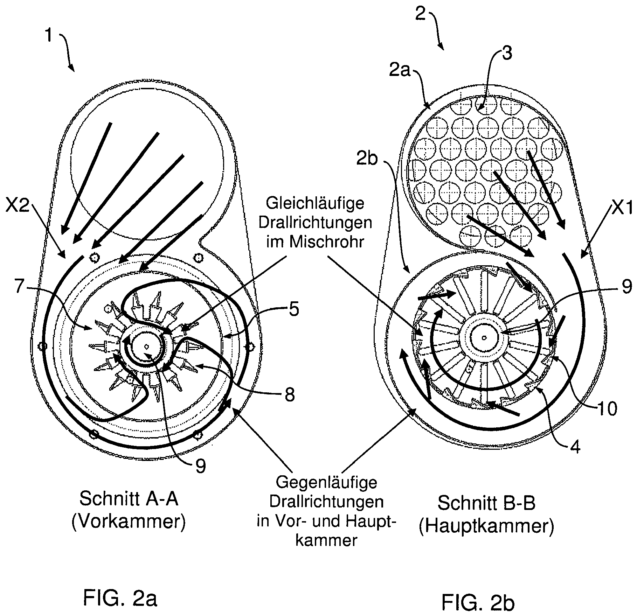

Figur 2a zeigt einen Schnitt A-A durch die Vorkammer 1 gemäß Figur 1, während Figur 2b einen Schnitt B-B durch die Hauptkammer 2 gemäß Figur 1 zeigt.

Figur 2a kann insbesondere entnommen werden, dass die Drallelemente 8 ausgeführt sind, um die Drall-/Rotationsrichtung der in der Vorkammer 1 erzeugten Drallströmung des Abgases beim Überströmen des Abgases in das Innere der Düseneinrichtung 7 umzukehren.

Figur 2b kann insbesondere entnommen werden, dass der Spiralkörper 2b das Abgas in eine Drall-/Rotationsrichtung beaufschlagt.

Ein Vergleich der Figuren 2a und 2b zeigt insbesondere , dass die durch den Spiralkörper 2b der Hauptkammer 2 erzeugte Drallrichtung des Abgases in der Hauptkammer 2, insbesondere dem Spiralkörper 2b, und die durch die Innenform/Innenkontur der Vorkammer 1 erzeugte Drallrichtung des Abgases in der Vorkammer 1 gegenläufig (entgegengesetzt) sind.

Den Figuren 2a und 2b kann ferner entnommen werden, dass die Einspritzdüse der Zuführeinrichtung 9, der Düsenkorb 7, das Mischrohr 4 und vorzugsweise der Spiralkörper 2b und das Hüllrohr 5 im Wesentlichen koaxial ausgerichtet sind.

Außerdem ist zu erkennen, dass die Drallrichtung des Abgases, das über die Hauptkammer 2 und die Mantelfläche der Mischeinrichtung 7 in die Mischeinrichtung 7 geführt wird, und die Drallrichtung des Abgases, das über die Zwischeneinrichtung 7 in die Mischeinrichtung 4 geführt wird, im Wesentlichen gleichläufig sind.

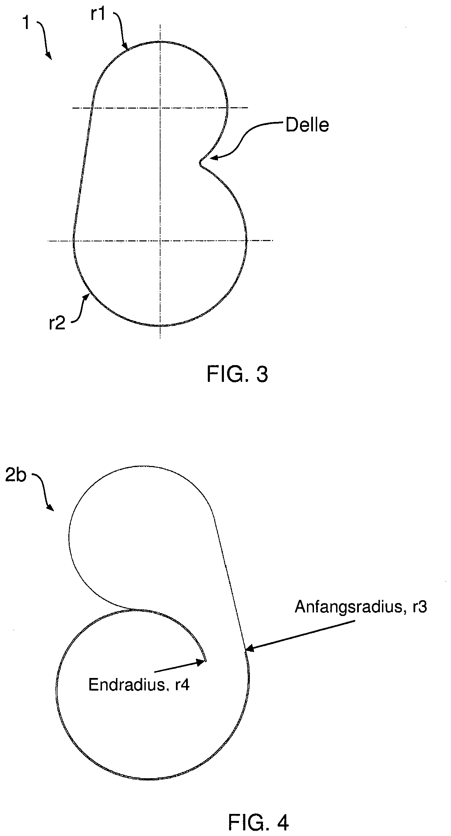

Figur 3 zeigt einen Querschnitt der Vorkammer 1. Der Querschnitt der Vorkammer 1 ist ausschlaggebend für die Drallstärke, den Druckverlust und die Symmetrie der Abgas-Drallströmung. Hier sind verschiedene Ausführungen möglich, wobei sich für die Symmetrie der Strömung ein im Wesentlichen ovaler Querschnitt mit einseitiger Delle erwiesen hat, insbesondere ein ovaler Querschnitt mit unterschiedlichen Endradien r1, r2 und einseitiger, zwischen den Endradien r1, r2 liegender Delle.

Figur 4 zeigt einen Querschnitt des Spiralkörpers 2b. Die Gestaltung des Spiralkörpers 2b in der Hauptkammer 2 beeinflusst wesentlich die Stärke der Drallströmung, die in das Mischrohr 4 einströmt. Dabei erweist sich ein starker Drall als vorteilhaft für große Tröpfchengrö-ßen des Additivs. Für kleinere Tröpfchengrößen des Additivs dagegen ist ein leichterer Drall vorteilhaft. Die Drallstärke wird eingestellt über das Verhältnis von Anfangsradius r3 zu Endradius r4 der Spiralform des Spiralkörpers 2b.

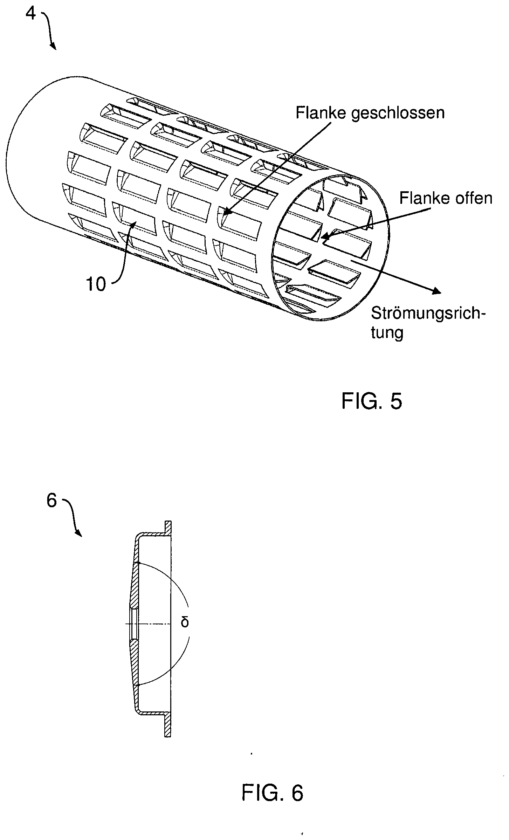

Figur 5 zeigt das Mischrohr 4. Das Mischrohr 4 ist die entscheidende Komponente für die Mischung und Aufbereitung des Abgas-Additiv-Gemisches. Seine Gestaltung beeinflusst den Druckverlust der gesamten Vorrichtung V, den verbleibenden Flüssigkeitsanteil am Ende des Mischrohrs 4 und die Gefahr der Ablagerung von kristallisierten Additivanteilen. Eine Variationsmöglichkeit ist hier der Durchmesser des Mischrohres 4. Als vorteilhaft erweist sich dabei ein Querschnitt, dessen Fläche 100% bis 130% des Einlassquerschnitts in die Vorrichtung (V) beträgt. Das Mischrohr 4 ist im Bereich der Hauptkammer 2 mit radial angeordneten Abgas-Durchgangsöffnungen versehen, die wie in DE 10 2012 014 334 A1 beschrieben gestaltet sein können.

Darüber hinaus hat es sich bei der Ausführung der Kiemen 10 als vorteilhaft erwiesen, die strömungsabgewandten Flanken der Kiemen 10 offen zu gestalten, um an dieser Stelle die Gefahr von Ablagerungen zu minimieren.

Figur 6 zeigt einen Querschnitt des Düsentopfs 6. An die Außenseite des Düsentopfes 6 wird die Einspritzdüse für das Additiv angebracht, deren Düsenspitze dann in den Strömungsraum hineinragt oder bündig zum Strömungsraum abschließt. Die Ausgestaltung als Topfkonstruktion erweist sich deshalb als vorteilhaft, weil damit am Düsenaustritt der axiale Anteil der Abgasströmung in Additiv-Sprayrichtung ausgerichtet ist und eine Rückströmung verhindert werden kann. Dies verhindert die Bildung von Ablagerungen durch auskristallisierte Additivkomponenten. Zusätzlich begünstigt wird diese Ausrichtung der Abgasströmung durch eine konische Ausgestaltung des Düsentopfes 6 an der Innenseite.

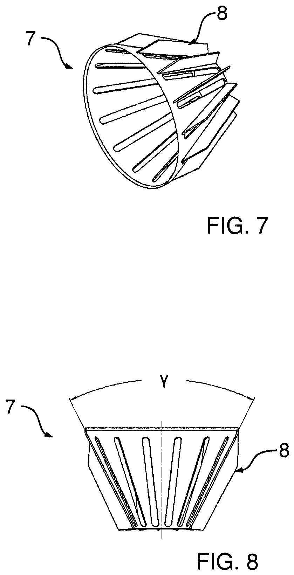

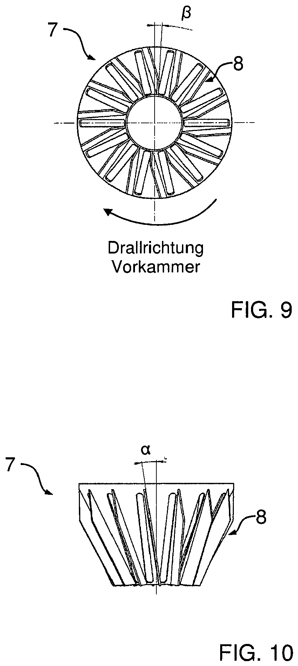

Figuren 7 bis 10 zeigen unterschiedliche Ansichten des Düsenkorbs 7. Nachfolgend wird auf die Figuren 7 bis 10 Bezug genommen.

Der Düsenkorb 7 schützt das Additiv-Spray davor, direkt von der in der Vorkammer 1 vorherrschenden Drallströmung erfasst zu werden und regelt/steuert die axiale Verteilung des einströmenden Abgases von der Vorkammer 1 in Richtung Mischrohr 4. Dadurch lässt sich steuern, wie stark das Additiv-Spray direkt nach dem Düsenaustritt der Einspritzdüse der Zuführeinrichtung 9 aufgefächert wird. Hier gilt es ein ideales Verhältnis von axialer und radialer Strömung zu realisieren. Dies ist dadurch gekennzeichnet, dass das Additiv-Spray gerade so stark aufgefächert wird, dass es im Bereich des Düsenkorbes 7 keinen Kontakt zur Wand des Düsenkorbes 7 hat.

Die Ausgestaltung des Düsenkorbes 7 kann entweder als zylindrisches oder als konisches Rohr erfolgen, wobei sich die konische Ausführung als vorteilhafter für eine symmetrische Strömung am Düsenaustritt erwiesen hat.

Der Düsenkorb 7 ist mantelflächenseitig perforiert und umfasst somit Abgas-Durchgangsöffnungen in der Mantelfläche. Als besonders vorteilhafte Ausgestaltung haben sich Langlöcher erwiesen, die vorzugsweise parallel zur Rohrachse des Düsenkorbs 7 ausgerichtet sein können.

Form, Anzahl und Länge der Langlöcher sind weitere Gestaltungsparameter, die Einfluss auf Symmetrie der Strömung, Druckverlust und axiale Aufteilung der Einströmung haben.

Die Drallklappen 8 sind außen am Düsenkorb 7 innerhalb des Hüllrohres 5 radial angeordnet. Ihre Anzahl entspricht der Anzahl der Langlöcher im Düsenkorb 7. Die Ausgestaltung der Drallklappen 8 hat Einfluss auf die Stärke des Dralls innerhalb des Düsenkorbes 7 und entscheidet über die Drehrichtung des Abgas-Dralls.

Die Form der Drallklappen 8 kann im Wesentlichen dreieckig, reckteckig oder trapezförmig gestaltet werden. Als besonders vorteilhaft hat sich dabei die Trapezform erwiesen.

Als weitere Variationsparameter können Höhe, Länge, Ausrichtung und Neigung angeführt werden. Diese haben Auswirkung auf Drallstärke, Drallausbildung über die Länge des Düsenkorbes 7 (linear, progressiv, degressiv), Druckverlust und Symmetrie der Strömung. Die Parameter stehen in einer komplexen Wechselwirkung zueinander und müssen auf das jeweilige Additiv-Spray angepasst werden.

Die Drallelemente 8 können in die Mittelachse aufweisenden Ebenen ausgerichtet sein oder in zur Mittelachse schräg verlaufenden Ebenen ausgerichtet sein.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche unabhängig von den in Bezug genommenen Merkmalen und Ansprüchen.

### Bezugszeichenliste

- V: Vorrichtung
- 1: Vorkammer
- 2: Hauptkammer
- 3: Perforierte Trenneinrichtung (Trennwand)
- 4: Mischeinrichtung (Mischrohr)
- 5: Hüllelement (Hüllrohr)
- 6: Düsentopf
- 7: Zwischeneinrichtung (Düseneinrichtung, Düsenkorb)
- 8: Drallelemente (Drallklappen)
- 9: Additiv-Zufuhreinrichtung
- 10: Kiemen
- r1, r2: Unterschiedlich große Durchmesser des Vorkammer-Querschnitts
- r3, r4: Anfangs- und Endradien des Spiralkörper-Querschnitts

## Patentansprüche

1. Vorrichtung (V) zur Nachbehandlung von Abgas einer Verbrennungskraftmaschine durch Mischung des Abgases mit einem zudosierten zumindest teilweise flüssigen Additiv, Verdampfung des flüssigen Anteils des Additives und Aufbereitung des Abgas-Additiv-Gemischs für einen nachgeordneten Katalysator mit einer einen Abgaseintritt aufweisenden Vorkammer (1), einer Hauptkammer (2), einer Mischeinrichtung (4), in der das Abgas mit einem Additiv vermischbar ist,
**dadurch gekennzeichnet, dass** die Vorrichtung ferner eine Zwischeneinrichtung (7) aufweist, über die ein Abgas-Teilstrom (X2) aus der Vorkammer (1) der Mischeinrichtung (4), vorzugsweise stirnseitig, zuführbar ist, wobei
- die Zwischeneinrichtung (7) mit Drallelementen (8) versehen ist, um die Drallrichtung der in der Vorkammer (1) erzeugten Drallströmung des Abgases beim Überströmen des Abgases in das Innere der Zwischeneinrichtung (7) umzukehren, und/oder
- die Vorkammer (1) ausgeführt ist, einen Abgas-Teilstrom (X2) in eine Drallrichtung zu beaufschlagen, und die Hauptkammer (2) ausgeführt ist, einen Abgas-Teilstrom (X1) aus der Vorkammer (1) in eine Drallrichtung zu beaufschlagen, wobei die Drallrichtung des Abgases in der Vorkammer (1) gegenläufig zur Drallrichtung des Abgases in der Hauptkammer (2) ausgeführt ist.

2. Vorrichtung (V) nach Anspruch 1, wobei die Mischeinrichtung (4) über ihre Mantelfläche und die Hauptkammer (2) mit der Vorkammer (1) verbunden ist und/oder über ihre Stirnseite und die Zwischeneinrichtung (7) mit der Vorkammer (1) verbunden ist.

3. Vorrichtung (V) nach Anspruch 1 oder 2, wobei die Mischeinrichtung (4) über ihre Stirnseite und eine Stirnseite der Zwischeneinrichtung (7) und Durchgangsöffnungen in der Mantelfläche der Zwischeneinrichtung (7) mit der Vorkammer (1) verbunden ist.

4. Vorrichtung (V) nach einem der vorhergehenden Ansprüche, wobei die Mischeinrichtung (4) über ihre Mantelfläche, die Hauptkammer (2) und eine perforierte Trenneinrichtung (3), die zwischen der Vorkammer (1) und der Hauptkammer (2) angeordnet ist, mit der Vorkammer (1) verbunden ist, und vorzugsweise die perforierte Trenneinrichtung (3) schräg, vorzugsweise rechtwinklig, zur Mittelachse der Zwischeneinrichtung (7), der Mischeinrichtung (4) und/oder der Vorkammer (1) ausgerichtet ist.

5. Vorrichtung (V) nach einem der vorhergehenden Ansprüche, wobei die Vorrichtung (V) ein Hüllelement (5) aufweist, das die Zwischeneinrichtung (7) in Umfangsrichtung der Zwischeneinrichtung (7) umgibt und vorzugsweise als Verlängerung der Mischeinrichtung (4) ausgeführt ist.

6. Vorrichtung nach einem der vorhergehenden Ansprüche, wobei die Vorkammer (1) eine Innenform umfasst, um Abgas in der Vorkammer (1) in eine Drallrichtung zu beaufschlagen, und/oder um Abgas um das Hüllelement (5) strömen zu lassen.

7. Vorrichtung (V) nach einem der vorhergehenden Ansprüche, wobei die Hauptkammer (2) einen Spiralkörper (2b) umfasst, um Abgas in der Hauptkammer (2) in eine Drallrichtung zu beaufschlagen, und vorzugsweise die Mischeinrichtung (4) zumindest abschnittsweise mittig im Spiralkörper (2b) verläuft.

8. Vorrichtung (V) nach einem der vorhergehenden Ansprüche, wobei die Hauptkammer (2) eine Einlasshaube (2a) aufweist, wobei sich der Querschnitt der Einlasshaube (2a) verjüngt, in Abgas-Strömungsrichtung und/oder ausgehend von der perforierten Trenneinrichtung (3).

9. Vorrichtung (V) nach einem der vorhergehenden Ansprüche, wobei die Mischeinrichtung (4) Abgas-Durchgangsöffnungen mit nach innen ausgestellten Kiemen (10) aufweist, vorzugsweise um zu verhindern, dass das über eine Zuführungseinrichtung (9) eindosierte Additiv die Mischeinrichtung (4) in Richtung Hauptkammer (2) verlassen kann und/oder die Kiemen (10) als Verdampfungsflächen für das Additiv wirken, wenn sie durch Überströmen des heißen Abgases aus der Hauptkammer (2) beheizt werden.

10. Vorrichtung (V) nach Anspruch 9, wobei die strömungsabgewandten Flanken der Kiemen (10) zumindest abschnittsweise offen ausgeführt sind und/oder die strömungszugewandten Flanken der Kiemen (10) zumindest abschnittsweise geschlossen ausgeführt sind und vorzugsweise die Kiemen (10) der Mischeinrichtung (4) axial und/oder radial zueinander versetzt angeordnet sind.

11. Vorrichtung (V) nach einem der vorhergehenden Ansprüche, wobei die Vorrichtung (V) eine Zuführeinrichtung (9) zum Zuführen eines Additivs zu dem Abgas umfasst und die Zuführeinrichtung (9) angeordnet ist, um das Additiv in die Zwischeneinrichtung (7) abzugeben.

12. Vorrichtung (V) nach einem der vorhergehenden Ansprüche, wobei die Drallelemente (8) von der Zwischeneinrichtung (7) nach außen abstehen und/oder die Zwischeneinrichtung (7) keinen stirnseitigen Abgaseintritt aufweist.

13. Vorrichtung (V) nach einem der vorhergehenden Ansprüche, wobei die Zwischeneinrichtung (7) stirnseitig an einen konischen Düsentopf (6) anschließt und vorzugsweise der Düsentopf (6) und das Hüllelement (5) einen Ringspalt definieren, über den Abgas aus der Vorkammer (1) über Abgas-Durchgangsöffnungen in der Mantelfläche der Zwischeneinrichtung (7) der Zwischeneinrichtung (7) zuführbar ist.

14. Vorrichtung (V) nach einem der vorhergehenden Ansprüche, wobei zwischen Mischeinrichtung (4) und Zwischeneinrichtung (7) ein Ringspalt ausgebildet ist, durch den Abgas in die Mischeinrichtung (4) überströmbar ist.

15. Vorrichtung (V) nach einem der vorhergehenden Ansprüche, wobei die Drallelemente (8) und/oder die Kiemen (10) länglich ausgeführt sind.

16. Vorrichtung (V) nach einem der vorhergehenden Ansprüche, wobei die Drallrichtung des Abgases, das über die Hauptkammer (2) und die Mantelfläche der Mischeinrichtung (7) der Mischeinrichtung (7) zugeführt wird, und die Drallrichtung des Abgases, das über die Zwischeneinrichtung (7) der Mischeinrichtung (4) zugeführt wird, gleichläufig sind.

17. Vorrichtung (V) nach einem der vorhergehenden Ansprüche, wobei die Mischeinrichtung (4), die Zwischeneinrichtung (7) und eine Additiv-Einspritzdüse einer Additiv-Zuführeinrichtung (9) koaxial ausgerichtet sind.

## Claims

1. Device (V) for the aftertreatment of exhaust gas from an internal combustion engine by mixing the exhaust gas with a metered addition of an at least partially liquid additive, evaporation of the liquid fraction of the additive and preparation of the exhaust gas-additive mixture for a downstream catalytic converter, comprising a prechamber (1) having an exhaust gas inlet, a main chamber (2), a mixing device (4), in which the exhaust gas can be mixed with an additive,
**characterized in that** the device furthermore comprises an intermediate device (7), via which a partial exhaust gas flow (X2) can be delivered from the prechamber (1) to the mixing device (4), preferably at the end face, wherein
- the intermediate device (7) is provided with swirl elements (8), in order to reverse the direction of swirl of the swirled exhaust gas flow generated in the prechamber (1) as the exhaust gas overflows into the interior of the intermediate device (7), and/or
- the prechamber (1) is designed to impel a partial exhaust gas flow (X2) in a direction of swirl, and the main chamber (2) is designed to impel a partial exhaust gas flow (X1) from the prechamber (1) in a direction of swirl, wherein the direction of swirl of the exhaust gas in the prechamber (1) is opposed to the direction of swirl of the exhaust gas in the main chamber (2).

2. Device (V) according to Claim 1, wherein the mixing device (4) is connected to the prechamber (1) via its circumferential surface and the main chamber (2) and/or is connected to the prechamber (1) via its end face and the intermediate device (7).

3. Device (V) according to Claim 1 or 2, wherein the mixing device (4) is connected to the prechamber (1) via its end face and an end face of the intermediate device (7) and passages in the circumferential surface of the intermediate device (7).

4. Device (V) according to one of the preceding claims, wherein the mixing device (4) is connected to the prechamber (1) via its circumferential surface, the main chamber (2) and a perforated separating device (3), which is arranged between the prechamber (1) and the main chamber (2), and preferably the perforated separating device (3) is oriented obliquely, preferably at right angles, to the central axis of the intermediate device (7), the mixing device (4) and/or the prechamber (1).

5. Device (V) according to one of the preceding claims, wherein the device (V) comprises a casing element (5), which encloses the intermediate device (7) in the circumferential direction of the intermediate device (7) and is preferably designed as an extension of the mixing device (4).

6. Device according to one of the preceding claims, wherein the prechamber (1) has an internal shape so as to impel exhaust gas in the prechamber (1) in a direction of swirl, and/or to cause exhaust gas to flow around the casing element (5).

7. Device (V) according to one of the preceding claims, wherein the main chamber (2) comprises a spiral body (2b), in order to impel exhaust gas in the main chamber (2) in a direction of swirl, and preferably the mixing device (4) or at least portions thereof runs centrally in the spiral body (2b).

8. Device (V) according to one of the preceding claims, wherein the main chamber (2) comprises an inlet hood (2a), wherein the cross section of the inlet hood (2a) tapers, in the exhaust gas flow direction and/or starting from the perforated separating device (3).

9. Device (V) according to one of the preceding claims, wherein the mixing device (4) comprises exhaust gas passages having inwardly issuing slits (10), preferably in order to prevent the metered additive introduced in via the feed device (9) being able to leave the mixing device (4) in the direction of the main chamber (2), and/or the slits (10) act as evaporation surfaces for the additive, when they are heated by the hot exhaust gas overflowing from the main chamber (2).

10. Device (V) according to Claim 9, wherein the flanks of the slits (10) remote from the flow are, at least in portions, of open design and/or the flanks of the slits (10) facing the flow are, at least in portions, of closed design and preferably the slits (10) of the mixing device (4) are staggered axially and/or radially in relation to one another.

11. Device (V) according to one of the preceding claims, wherein the device (V) comprises a feed device (9) for delivering an additive to the exhaust gas and the feed device (9) is arranged so as to deliver the additive into the intermediate device (7).

12. Device (V) according to one of the preceding claims, wherein the swirl elements (8) protrude outwards from the intermediate device (7) and/or the intermediate device (7) comprises no end-face exhaust gas inlet.

13. Device (V) according to one of the preceding claims, wherein the intermediate device (7) at an end face connects to a conical nozzle pod (6) and preferably the nozzle pod (6) and the casing element (5) define an annular gap, via which exhaust gas can be delivered from the prechamber (1) to the intermediate device (7) via exhaust gas passages in the circumferential surface of the intermediate device (7).

14. Device (V) according to one of the preceding claims, wherein an annular gap, through which exhaust gas can overflow into the mixing device (4), is formed between mixing device (4) and intermediate device (7).

15. Device (V) according to one of the preceding claims, wherein the swirl elements (8) and/or the slits (10) are of elongated design.

16. Device (V) according to one of the preceding claims, wherein the direction of swirl of the exhaust gas which is delivered to the mixing device (7) via the main chamber (2) and the circumferential surface of the mixing device (7), and the direction of swirl of the exhaust gas which is delivered to the mixing device (4) via the intermediate device (7), are the same.

17. Device (V) according to one of the preceding claims, wherein the mixing device (4), the intermediate device (7) and an additive injection nozzle of an additive-feed device (9) are oriented coaxially.

## Revendications

1. Ensemble (V) de traitement des gaz d'échappement d'un moteur à combustion interne par mélange des gaz d'échappement avec un additif dosé au moins en partie sous forme liquide, vaporisation de la partie liquide de l'additif et préparation du mélange d'additif et de gaz d'échappement pour un catalyseur disposé en aval et présentant une préchambre (1) dotée d'une entrée de gaz d'échappement, une chambre principale (2) et un dispositif de mélange (4) dans lequel les gaz d'échappement peuvent être mélangés à l'additif, **caractérisé en ce que**
l'ensemble présente en outre un dispositif intermédiaire (7) par lequel une partie (X2) de l'écoulement de gaz d'échappement provenant de la préchambre (1) peut être amenée dans le dispositif de mélange (4) de préférence frontalement,
**en ce que** le dispositif intermédiaire (7) est doté d'éléments de tourbillonnage (8) qui inversent le sens de rotation de l'écoulement des gaz d'échappement formé dans la préchambre (1) lorsque les gaz d'échappement sont transférés à l'intérieur du dispositif intermédiaire (7) et/ou
**en ce que** la préchambre (1) est configurée pour amener une partie (X2) de l'écoulement de gaz d'échappement dans une direction de tourbillonnage et
**en ce que** la chambre principale (2) est configurée pour amener une partie (X1) de l'écoulement de gaz d'échappement provenant de la préchambre (1) dans une direction de tourbillonnage, la direction de tourbillonnage des gaz d'échappement dans la préchambre (1) étant opposée à la direction de tourbillonnage des gaz d'échappement dans la chambre principale (2).

2. Ensemble (V) selon la revendication 1, dans lequel le dispositif de mélange (4) est relié à la préchambre (1) par sa surface d'enveloppe et par la chambre principale (2) et/ou est relié à la préchambre (1) par son côté frontal et le dispositif intermédiaire (7).

3. Ensemble (V) selon les revendications 1 ou 2, dans lequel le dispositif de mélange (4) est relié à la préchambre (1) par son côté frontal, un côté frontal du dispositif intermédiaire (7) ainsi que des ouvertures de passage ménagées dans la surface d'enveloppe du dispositif intermédiaire (7).

4. Ensemble (V) selon l'une des revendications précédentes, dans lequel le dispositif de mélange (4) est relié à la préchambre (1) par sa surface d'enveloppe, la chambre principale (2) et un dispositif perforé de séparation (3) disposé entre la préchambre (1) et la chambre principale (2), le dispositif perforé de séparation (3) étant orienté de préférence obliquement et de préférence à angle droit par rapport à l'axe central du dispositif intermédiaire (7), du dispositif de mélange (4) et/ou de la préchambre (1).

5. Ensemble (V) selon l'une des revendications précédentes, dans lequel l'ensemble (V) présente un élément d'enveloppe (5) qui entoure le dispositif intermédiaire (7) dans la direction périphérique du dispositif intermédiaire (7) et qui est de préférence réalisé sous la forme d'un prolongement du dispositif de mélange (4).

6. Ensemble selon l'une des revendications précédentes, dans lequel la préchambre (1) présente une forme intérieure qui lui permet d'amener les gaz d'échappement présents dans la préchambre (1) dans une direction de tourbillonnage et/ou qui permet aux gaz d'échappement de s'écouler autour de l'élément d'enveloppe (5).

7. Ensemble (V) selon l'une des revendications précédentes, dans lequel la chambre principale (2) comporte un corps spiralé (2b) qui amène les gaz d'échappement présents dans la chambre principale (2) dans une direction de tourbillonnage, le dispositif de mélange (4) étant de préférence situé au moins en partie au milieu du corps spiralé (2b).

8. Ensemble (V) selon l'une des revendications précédentes, dans lequel la chambre principale présente un capot d'admission (2a), la section transversale du capot d'admission (2a) se rétrécissant dans la direction d'écoulement des gaz d'échappement et/ou à partir du dispositif perforé de séparation (3).

9. Ensemble (V) selon l'une des revendications précédentes, dans lequel le dispositif de mélange (4) présente des ouvertures de passage des gaz d'échappement qui présentent des ouïes (10) débordant vers l'intérieur, de préférence pour empêcher que l'additif injecté par un dispositif d'amenée (9) puisse quitter le dispositif de mélange (4) en direction de la chambre principale (2), et/ou les ouïes (10) agissant comme surfaces de vaporisation pour l'additif lorsqu'elles sont chauffées par le balayage des gaz d'échappement chauds provenant de la chambre principale (2).

10. Ensemble (V) selon la revendication 9, dans lequel les flancs des ouïes (10) non tournés vers l'écoulement sont au moins en partie ouverts et/ou les flancs des ouïes (10) tournés vers l'écoulement sont au moins en partie fermés, les ouïes (10) étant de préférence disposées en décalage axial par rapport au dispositif de mélange (4) et/ou en décalage radial mutuel.

11. Ensemble (V) selon l'une des revendications précédentes, dans lequel l'ensemble (V) comporte un dispositif d'amenée (9) qui amène un additif dans les gaz d'échappement, le dispositif d'amenée (9) étant disposé de manière à délivrer l'additif dans le dispositif intermédiaire (7).

12. Ensemble (V) selon l'une des revendications précédentes, dans lequel les éléments de tourbillonnage (8) débordent de l'extérieur par rapport au dispositif intermédiaire (7) et/ou le dispositif intermédiaire (7) ne présente pas d'entrée frontale de gaz d'échappement.

13. Ensemble (V) selon l'une des revendications précédentes, dans lequel le dispositif intermédiaire (7) se raccorde frontalement à un chapeau conique de tuyère (6), le chapeau de tuyère (6) et l'élément d'enveloppe (5) définissant un interstice annulaire par lequel les gaz d'échappement provenant de la préchambre (1) peuvent être amenés dans le dispositif intermédiaire (7) par l'intermédiaire d'ouvertures de passage de gaz d'échappement ménagées dans la surface d'enveloppe du dispositif intermédiaire (7).

14. Ensemble (V) selon l'une des revendications précédentes, dans lequel un interstice annulaire par lequel les gaz d'échappement peuvent être transférés dans le dispositif de mélange (4) est formé entre le dispositif de mélange (4) et le dispositif intermédiaire (7).

15. Ensemble (V) selon l'une des revendications précédentes, dans lequel les éléments de tourbillonnage (8) et/ou les ouïes (10) sont allongés.

16. Ensemble (V) selon l'une des revendications précédentes, dans lequel la direction de tourbillonnage des gaz d'échappement amenés dans le dispositif de mélange (7) par l'intermédiaire de la chambre principale (2) et de la surface d'enveloppe du dispositif de mélange (7) et la direction de tourbillonnage des gaz d'échappement qui sont amenés dans le dispositif de mélange (4) par l'intermédiaire du dispositif intermédiaire (7) sont identiques.

17. Ensemble (V) selon l'une des revendications précédentes, dans lequel le dispositif de mélange (4), le dispositif intermédiaire (7) et une tuyère d'injection d'additif d'un dispositif (9) d'amenée d'additif sont alignés coaxialement.
